# EUROPÄISCHE PATENTANMELDUNG

(11) **EP 0 980 651 A1**
(43) Veröffentlichungstag der Anmeldung: **23.02.2000**
(21) Anmeldenummer: 99115444.4
(22) Anmeldetag: 05.08.1999
(51) Int. Cl.: A23G 3/00, A21D 13/08

(54) **Süsswarenprodukt und Verfahren zu seiner Herstellung**

(30) Priorität: 14.08.1998 DE 19836920
(71) Anmelder: FRANZ ZENTIS GMBH & CO., 52070 Aachen (DE)
(72) Erfinder: Otte, Dietmar, Dipl.-Ing., 52076 Aachen (DE); Brack, Holger, Dipl.-Ing., 52159 Roetgen (DE)
(74) Vertreter: Bauer, Dirk, Dipl.-Ing. Dipl.-Kfm.

(57) **Zusammenfassung**

Ein Süßwarenprodukt (1) in mundgerechter Größe besteht aus mindestens zwei Waffelteilen (2, 3), die derart aneinandergefügt sind, daß sie einen abgeschlossenen Raum begrenzen. In dem Raum befindet sich eine Füllung (4), die in direkter Berührung mit den Waffelteilen (2, 3) steht und einen Fettanteil von 30 bis 50 Gew.-% und einen Wassergehalt von nicht mehr als 3 Gew.-% aufweist. Die Außenseiten der gefügten Waffelteile (2, 3) sind mit einer Fettglasur (8) oder Schokolade versehen. Um einen festen Zusammenhalt der beiden Waffelteile (2, 3) auch ohne die Verwendung eines separaten Verbindungsmittels zu erreichen sowie die Neigung der Füllung (4) zum Ausölen zu reduzieren, wird vorgeschlagen, daß die Füllung (4) mit einem inerten Gas aufgeschlagen ist. Des weiteren wird ein Verfahren zur Herstellung eines solchen Süßwarenprodukts (1) vorgeschlagen.

## Beschreibung

Die Erfindung betrifft ein Süßwarenprodukt in mundgerechter Größe, das aus mindestens zwei Waffelteilen besteht die derart aneinandergefügt sind, daß sie einen abgeschlossenen Raum begrenzen, in dem sich eine Füllung befindet, die in direkter Berührung mit den Waffenteilen steht. Die Füllung weist einen Fettgehalt von 30 bis 50 Gew.-% und einen Wassergehalt von nicht mehr als 3 Gew.-% auf. Dabei sind die Außenseiten der gefügten Waffelteile mit einer Fettglasur oder Schokolade versehen.

Ein derartiges Süßwarenprodukt ist beispielsweise aus der EP 0 086 319 B1 bekannt. Die darin verwendete Füllung besitzt bei Raumtemperatur eine cremige halbflüssige Konsistenz, wodurch als Gegensatz zu der knusprigen Waffelhülle ein angenehm flüssiges Gefühl im Mund der dieses Süßwarenprodukt verzehrenden Personen erzielt werden soll.

Die halbflüssige Konsistenz der Füllung des bekannten Produkts hat zur Folge, daß die Füllungsmasse eine einmal vorgegebene Form bei Raumtemperatur nicht beibehalten würde, wenn sie nicht durch die Waffelschalen begrenzt und dadurch an einem Zerfließen gehindert würde. Die Fließeigenschaften der Füllung des bekannten Produkts werden durch einen entsprechend hohen Anteil eines oder mehrerer pflanzlicher Öle mit niedrigem Schmelzpunkt erreicht.

Das bekannte Süßwarenprodukt ist - insbesondere aufgrund der Eigenschaften der Füllung - mit den folgenden Nachteilen behaftet:

Zum einen ist eine zusätzliche Verbindung der beiden Waffelhalbschalen erforderlich, um ein insgesamt stabiles Produkt zu erhalten. Diese Verbindung erfolgt durch Aufbringen von flüssiger Schokolade auf die Stirnseiten der beiden Halbschalen, die nach dem Aushärten der Schokolade regelrecht eine Verklebung der beiden Waffelteile darstellt. Die - punktuelle oder umlaufende - Aufbringung der Schokolade als Verbindungsmittel stellt jedoch einen zusätzlichen Verfahrensschritt bei der Herstellung dar, der das Produkt verteuert.

Zum anderen lassen sich die Halbschalen, die zusammenhängend in Form von Waffelplatten ausgebacken werden, bei dem bekannten Produkt trotz der stirnseiten Verklebung mit Schokolade nicht erst im gefüllten und zusammengefügten Zustand zu Einzelprodukten trennen. Aufgrund der halbflüssigen Konsistenz der Füllung würden sich die zuvor gefügten Halbschalen nämlich unweigerlich gegeneinander verschieben. Bei dem bekannten Produkt ist daher zunächst eine Zerteilung der Waffelplatten in einzelne Halbschalen durchzuführen, die dann jeweils einzeln gefüllt und unter Zuhilfenahme von Schokolade aneinandergefügt werden. Diese Vorgehensweise verursacht ebenfalls vergleichsweise hohe Herstellungskosten und erfordert einen hohen apparativen Aufwand.

Außerdem neigt die halbflüssige Füllung des bekannten Süßwarenprodukts aufgrund ihres hohen Gehalts niedrigschmelzender Pflanzenöle zum Ausölen. Hierdurch kommt es bei längeren Lagerzeiten des Produkts des öfteren zu einem Abplatzen von Teilen einer Schokoladenumhüllung der beiden Waffelhalbschalen sowie zur Bildung von Fettreif.

Der Erfindung liegt die Aufgabe zugrunde, ein Süßwarenprodukt zu schaffen, bei dem die Waffelhalbschalen allein aufgrund der damit in Kontakt stehenden Füllung einen hinreichend festen Zusammenhalt erhalten und nicht unter Zuhilfenahme eines separaten Verbindungsmittels zusammengefügt werden müssen. Ferner soll ein Einzelprodukt nach Befüllung einer plattenweise zusammenhängenden großen Anzahl von Produkten geschnitten werden können, ohne daß eine Verschiebung der Waffelteile eintritt. Außerdem soll ein Abplatzen einer Umhüllung aus Fettglasur oder Schokolade auch bei längeren Lagerzeiten zuverlässig verhindert werden.

Ausgehend von einem Süßwarenprodukt der eingangs beschriebenen Art wird diese Aufgabe erfindungsgemäß dadurch gelöst, daß die Füllung mit einem inerten Gas aufgeschlagen ist.

Durch das Aufschlagen der Füllungsmasse wird zum einen dessen Fließgrenze erhöht, so daß die mit den gefügten Waffelteilen in Verbindung stehende Füllungsmasse dem Produkt auch ohne weitere Verbindungsmittel zwischen den Waffelteilen einen hervorragenden Zusammenhalt verleiht. Dieser ist so gut, daß Waffelplatten mit einer Vielzahl aneinanderhängender Waffelteile jeweils für ein Einzelprodukt zunächst gleichzeitig mit der Füllungsmasse versehen werden können und ein Zerteilen dieser Waffelplatten erst nach dem plattenweisen Zusammenfügen erfolgen kann. Die Produktionskosten für das erfindungsgemäße Produkt sind somit aufgrund des nicht erforderlichen separaten Verbindungsmittels sowie der sehr rationellen Befüllungsmöglichkeit der Hohlräume sehr gering.

Ein weiterer Vorteil des Aufsehlagens ist darin zu sehen, daß die Fettwanderung durch die Existenz der in der Füllung enthaltenen kleinsten Gaseinschlüsse, die sich hinsichtlich der Fettmigration wie Hindernisse darstellen, stark eingeschränkt wird. Hierdurch tritt auf der äußeren Fettglasur- bzw. Schokoladenbeschichtung des Produkts kein Fettreif auf, der die Optik des Produkts sehr stark beeinträchtigen würde. Auch wird ein Abplatzen von Teilen dieser Glasur selbst nach längeren Lagerzeiten durch die eingeschränkte Fettmigration verhindert.

Als weiterer Vorteil des Süßwarenprodukts gemäß der Erfindung ist es anzusehen, daß der Füllung aufgrund des Aufschlagens eine gewisse Leichtigkeit vermittelt wird, die eine besondere positive sensorische Beurteilung des Produkts zur Folge hat. Vorteilhafterweise liegt der Anteil des Gases in der Füllung zwischen 5 Vol.-% und 25 Vol.-%.

Wenn ein Anteil zwischen 20 Gew.% und 80 Gew.-% des Fettanteils der Füllung bei Raumtemperatur in kristalliner Form vorliegt, läßt sich die Füllung besonders einfach aufschlagen und eine hohe Fließgrenze erreichen. Ein hoher Anteil kristalliner Fettpartikel in der Füllung bewirkt außerdem eine weitere Verminderung der Migration der in flüssiger Form vorliegenden Fettmoleküle, woraus die bereits zuvor geschilderten Vorteile (Vermeidung von Feitreif sowie eines Abplatzens der äußeren Glasur) resultieren.

Eine weitere Vereinfachung des Aufschlagprozesses läßt sich erzielen, indem die Füllung bei einer Temperatur aufgeschlagen wird, bei der zumindest ein Anteil des Fetts in kristalliner Form vorliegt.

Wenn die Fließgrenze der Füllung nach deren Aufschlagen bereits einen solchen Wert aufweist, daß die gefügten Waffelteile allein durch die Füllung relativ zueinander fixiert sind, kann unmittelbar nach dem Aufschlagen ein Einbringen der Füllung in die Waffelteile erfolgen.

Die Erfindung weiter ausgestaltend ist vorgesehen, daß die Füllung hochschmelzende pflanzliche Fette, wie beispielsweise Palmkernfett und/oder Sojafett, enthält.

Um eine große Bandbreite geschmacklicher Variationen verwirklichen zu können, ist des weiteren vorgesehen, daß die Füllung Kakaopulver und/oder Milchtrockeustoffe und/oder Nußpaste und/oder Mandelpaste enthält. Auch eine Verwendung von Nuß- oder Mandelpartikeln in der Füllung ist möglich und sinnvoll, da ein hoher Partikelanteil ebenfalls eine Herabsetzung der Migrationsgeschwindigkeit der flüssigen Fettmoleküle zur Folge hat.

Vorteilhafterweise wird als inertes Gas Stickstoff verwendet. Bedarfsweise können der Füllung auch Stabilisatoren und/oder Emulgatoren zugesetzt werden.

Ein Verfahren zur Herstellung eines Süßwarenprodukts in mundgerechter Größe, das jeweils aus mindestens zwei Waffelteilen besteht, die derart aneinandergefügt sind, daß sie einen abgeschlossenen Raum begrenzen, in dem sich eine Füllung befindet, die in direkter Berührung mit den Waffelteilen steht, weist erfindungsgemäß die folgenden Verfahrensschritte auf:
a) Regelmäßig angeordnete vertiefte Bereiche einer ersten Waffelplatte werden mit einer Füllungsmasse, die mit einem inerten Gas aufgeschlagen und bei Raumtemperatur nicht fließfähig ist, gefüllt.
b) Die erste Waffelplatte wird mit einer zweiten Waffelplatte, die entweder keine vertieften Bereiche aufweist oder entsprechend wie die erste Waffelplatte ausgebildet ist und deren vertiefte Bereiche zuvor ebenfalls gemäß Verfahrensschritt a) gefüllt worden sind, abgedeckt, so daß im letztgenannten Fall die vertieften Bereiche beider Platten mit ihren Öffnungsquerschnitten einander zugewandt sind und so miteinander korrespondieren, daß sie einen geschlossenen Raum bilden.
c) Die solchermaßen aneinandergefügten Waffelplatten werden derart in eine Mehrzahl von Teilstücken unterteilt, daß sämtliche geschlossene Räume erhalten bleiben.

Bei dem erfindungsgemäßen Herstellungsverfahren ist es nicht erforderlich, die Waffelteile jedes einzelnen Produkts separat zu füllen und sodann zu einer Einheit zusammenzufügen. Vielmehr erfolgen die Befüllung und das Fügen der Waffelteile plattenweise, woraus sich eine hohe Wirtschaftlichkeit des Verfahrens ergibt. Aufgrund der Verwendung einer aufgeschlagenen und bei Raumtemperatur nicht fließfähigen Füllung wird den zusammengefügten Waffelteilen ein ausgezeichneter Halt verliehen, so daß ein Verrutschen der zuvor gefügten Waffelteile beim Unterteilungsvorgang nicht zu befürchten ist.

Vorteilhafterweise werden die Teilstücke mit einer Fettglasur beschichtet, so daß Trennfugen zwischen den Waffelteilen beim fertigen Produkt nicht mehr sichtbar sind.

Alternativ kann jedes aus einer Waffelplatte herausgetrennte Teilstück entweder einen einzigen abgeschlossenen Hohlraum oder nach Art eines Riegels eine Mehrzahl von hintereinander angeordneten geschlossenen Räumen aufweisen. Die Teilstücke können entweder aus den Waffelplatten ausgeschnitten oder ausgesägt werden.

Eine rationelle Art der Einbringung der Füllungsmasse besteht darin, daß diese in die vertieften Bereiche der Waffelplatten eingestrichen wird.

Schließlich ist noch vorgesehen, daß die Füllungsmasse nach dem Füllen der vertieften Bereiche geringfügig über deren Ränder vorsteht, so daß beispielsweise beim anschließenden Aufsetzen einer ebenen Waffelplatte ein sicherer Kontakt mit diesem als Abschluß dienenden Waffelteil erzielt wird.

Das erfindungsgemäße Süßwarenprodukt wird nachfolgend anhand eines in der Zeichnung dargestellten Ausführungsbeispiels näher erläutert. Es zeigt:
- Figur 1: eine Draufsicht auf ein pyramidenförmiges Süßwarenprodukt
und
- Figur 2: einen Querschnitt entlang der Linie II - II durch das Süßwarenprodukt gemäß Figur 1

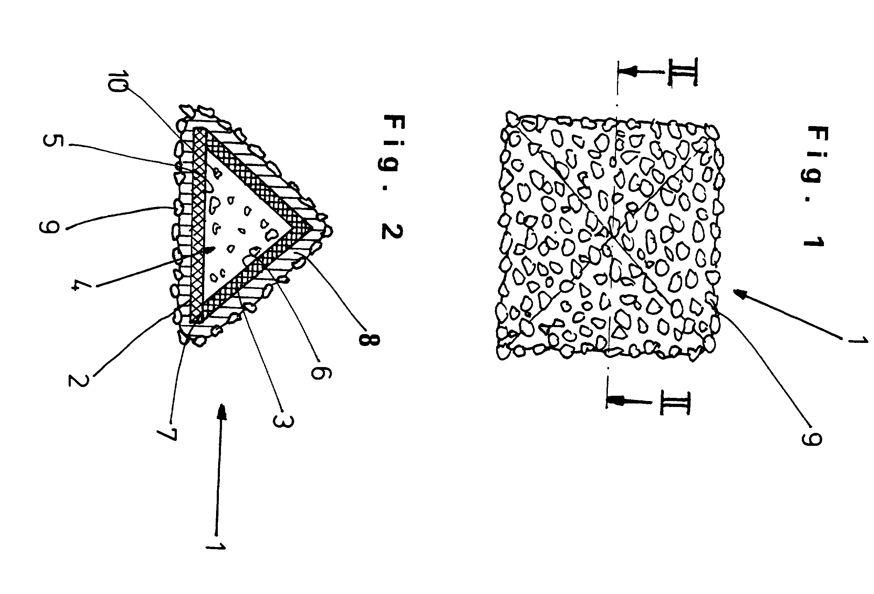

Ein in den Figuren 1 und 2 dargestelltes Süßwarenprodukt 1 besteht aus einem unteren Waffelteil 2 und einem oberen Waffelteil 3. Das untere Waffelteil 2 besitzt die Form einer quadratischen Platte, während das obere Waffelteil 3 in Form eines Zelts mit einer quadratischen Grundfläche ausgebildet ist. Die beiden Waffelteile 2 und 3 sind derart aneinandergefügt, daß sie einen abgeschlossenen Raum begrenzen, der vollständig mit einer Füllung 4 ausgefüllt ist. Die Füllung 4 steht allseits in unmittelbarem Kontakt mit Innenflächen 5 und 6 der Waffelteile 2 und 3. Aufgrund der hohen Fließgrenze der mit Stickstoffgas aufgeschlagenen Füllung 4 halten die beiden Waffelteile 2 und 3 allein aufgrund der Füllung 4 und ohne Verwendung eines an Stirnseiten 7 des oberen Waffelteils 3 aufgebrachten Verbindungsmittels zusammen.

Die gefügten Waffelteile 2 und 3 sind außen mit einer Fettglasur 8 ummantelt, die im noch flüssigen Zustand mit Nußpartikeln 9 bestreut wird. Nach Aushärten der Feitglasur 8 haften die Nußpartikel 9 fest an der Fettglasur 8 und bestimmen das aus Figur 1 ersichtliche charakteristische äußere Erscheinungsbild des Süßwarenprodukts 1.

Der Schnittdarstellung gemäß Figur 2 läßt sieh ferner entnehmen, daß die Füllung 4 ebenfalls Nußpartikel 10 enthält.

Die Füllung 4 besteht aus geschälten Haselnußkernen, pflanzlichem Fett (z.T. gehärtet), Zucker, Milchbestandteilen, Kakaopulver, Lecithin (Emulgator) und Vanillin. Nach dem Mischen der vorgenannten Zutaten wird die Füllungsmasse mit einem zweistufigen Walzvorgang auf eine Partikelgrößenverteilung von 95 % < 30µm gebracht. Anschließend wird die Füllungsmasse einem Conchen-Rührwerk zugeführt.

Nach dem Conchierprozeß wird die Füllung 4 mit Hilfe einer Temperierungsanlage auf ca. 20 bis 24 °C heruntergekühlt und vorkristallisiert. Anschließend erfolgt das Aufschlagen der Füllung 4, das mit Hilfe eines schnell drehenden Rotors (Dissolverscheibe) erfolgt, an den unmittelbar angrenzend die Stickstoffeinleitung mit einem Überdruck von ca. 7 bis 8 bar erfolgt.

Die in der vorbeschriebenen Weise hergestellte Füllung 4 zeichnet sich durch einen hohen Anteil kristallförmig vorliegender Fettmoleküle aus. Eine derartige Fettkristallstruktur in der Füllung 4 bindet den verbleibenden Flüssigfettanteil und verhindert ein Ausölen. Des weiteren wird durch das Aufschlagen die Fließeigenschaft der Füllung 4 aufgehoben. Diese bekommt eine hohe Standfestigkeit und bewirkt allein aufgrund der Adhäsionskräfte zu den Waffelteilen deren zuverlässigen Zusammenhalt.

Nach dem Aufschlagen wird die Füllung 4 auf eine Waffelplatte aufgebracht, die aus einer Vielzahl aneinanderhängender zeltförmiger Waffelteile 3 besteht. Die Füllung 4 wird mit Hilfe eines Schabers derart in die Vertiefungen in der Waffelplatte eingestrichen, daß die Füllung 4 geringfügig über die Stirnseiten 7 vorsteht. Sodann wird die Vertiefungen aufweisende Waffelplatte mit einer gleich großen völlig eben ausgebildeten Waffelplatte abgedeckt. Dabei ergibt sich ein fester Zusammenhalt beider Waffelplatten allein aufgrund der hohen Fließgrenze der Füllung 4 in Verbindung mit den Adhäsionskräften. Im zusammengefügten Zustand werden die Waffelplatten mit Hilfe einer Schneideinrichtung in Teilstücke unterteilt, die jeweils einen abgeschlossenen und mit der Füllung 4 ausgefüllten Raum aufweisen.

Diese Teilstücke werden anschließend mit einer Fettglasur 8 überzogen, wodurch die Fugen zwischen den beiden Waffelteilen 2 und 3 überdeckt werden. Die noch flüssige Fettglasur 8 wird zum Schluß mit Nußpartikeln 9 bestreut bzw. darin gewendet, so daß diese Nußpartikel 9 nach dem Aushärten der Fettglasur 8 fest an dem fertigen Süßwarenprodukt 1 anhaften.

## Patentansprüche

1. Süßwarenprodukt (1) in mundgerechter Größe, bestehend aus mindestens zwei Waffelteilen (2, 3), die derart aneinandergefügt sind, daß sie einen abgeschlossenen Raum begrenzen, in dem sich eine Füllung (4) befindet, die in direkter Berührung mit den Waffelteilen (2, 3) steht und einen Fettanteil von 30 - 50 Gew.-% und einen Wassergehalt von nicht mehr als 3 Gew.-% aufweist, wobei die Außenseiten der gefügten Waffelteile (2, 3) mit einer Fettglasur (8) oder Schokolade versehen sind, dadurch gekennzeichnet, daß die Füllung (4) mit einem inerten Gas aufgeschlagen ist.

2. Süßwarenprodukt nach Anspruch 1, dadurch gekennzeichnet, daß der Anteil des Gases in der Füllung (4) zwischen 5 Vol.-% und 25 Vol.-% beträgt.

3. Süßwarenprodukt nach Anspruch 1 oder 2, dadurch gekennzeichnet, daß ein Anteil zwischen 20 Gew.-% und 80 Gew.-% des Fettanteils der Füllung (4) bei Raumtemperatur in kristalliner Form vorliegt.

4. Süßwarenprodukt nach einem der Ansprüche 1 bis 3, dadurch gekennzeichnet, daß die Füllung (4) bei einer Temperatur aufgeschlagen wird, bei der zumindest ein Anteil des Fetts in kristalliner Form vorliegt.

5. Süßwarenprodukt nach einem der Ansprüche 1 bis 4, dadurch gekennzeichnet, daß die Fließgrenze der Füllung (4) nach deren Aufschlagen einen solchen Wert aufweist, daß die gefügten Waffelteile (2, 3) allein durch die Füllung (4) relativ zueinander fixiert sind.

6. Süßwarenprodukt nach einem der Ansprüche 1 bis 5, dadurch gekennzeichnet, daß die Füllung (4) hochschmelzende pflanzliche Fette enthält.

7. Süßwarenprodukt nach einem der Ansprüche 1 bis 6, dadurch gekennzeichnet, daß die Füllung (4) Kakaopulver und/oder Milchtrockenstoffe und/oder Nußpaste und/oder Mandelpaste enthält.

8. Süßwarenprodukt nach einem der Ansprüche 1 bis 7, dadurch gekennzeichnet, daß die Füllung (4) Nuß- und/oder Mandelpartikel (10) enthält.

9. Süßwarenprodukt nach einem der Ansprüche 1 bis 8, dadurch gekennzeichnet, daß das inerte Gas Stickstoff ist.

10. Süßwarenprodukt nach einem der Ansprüche 1 bis 9, dadurch gekennzeichnet, daß die Füllung (4) Stabilisatoren und/oder Emulgatoren enthält.

11. Verfahren zur Herstellung eines Süßwarenprodukts in mundgerechter Größe, das jeweils aus mindestens zwei Waffelteilen besteht, die derart aneinandergefügt sind, daß sie einen abgeschlossenen Raum begrenzen, in dem sich eine Füllung befindet, die in direkter Berührung mit den Waffelteilen steht, mit den folgenden Verfahrensschritten:
a) Regelmäßig angeordnete vertiefte Bereiche einer ersten Waffelplatte werden mit einer Füllungsmasse, die mit einem inerten Gas aufgeschlagen und bei Raumtemperatur nicht fließfähig ist, gefüllt.
b) Die erste Waffelplatte wird mit einer zweiten Waffelplatte, die entweder keine vertieften Bereiche aufweist oder entsprechend wie die erste Waffelplatte ausgebildet ist und deren vertiefte Bereiche zuvor ebenfalls gemäß Verfahrensschritt a) gefüllt worden sind, abgedeckt, so daß im letztgenannten Fall die vertieften Bereiche beider Platten mit ihren Öffnungsquerschnitten einander zugewandt sind und so miteinander korrespondieren, daß sie einen geschlossenen Raum bilden.
c) Die solchermaßen aneinandergefügten Waffelplatten werden derart in eine Mehrzahl von Teilstücken unterteilt, daß sämtliche geschlossene Räume erhalten bleiben.

12. Verfahren nach Anspruch 11, dadurch gekennzeichnet, daß die Teilstücke mit einer Fettglasur beschichtet werden.

13. Verfahren nach Anspruch 11 oder 12, dadurch gekennzeichnet, daß jedes Teilstück einen einzigen geschlossenen Raum aufweist.

14. Verfahren nach Anspruch 11 oder 12, dadurch gekennzeichnet, daß jedes Teilstück nach Art eines Riegels eine Mehrzahl von hintereinander angeordneten geschlossenen Räumen aufweist.

15. Verfahren nach einem der Ansprüche 11 bis 14, dadurch gekennzeichnet, daß die Teilstücke ausgeschnitten oder ausgesägt werden.

16. Verfahren nach einem der Ansprüche 11 bis 15, dadurch gekennzeichnet, daß die Füllungsmasse in die vertieften Bereiche der Waffelplatten eingestrichen wird.

17. Verfahren nach einem der Ansprüche 11 bis 16, dadurch gekennzeichnet, daß die Füllungsmasse nach dem Füllen der vertieften Bereiche geringfügig über deren Ränder vorsteht.
